# EUROPÄISCHE PATENTANMELDUNG

(11) **EP 1 106 565 A1**
(43) Veröffentlichungstag der Anmeldung: **13.06.2001**
(21) Anmeldenummer: 00126154.4
(22) Anmeldetag: 30.11.2000
(51) Int. Cl.: B67D 3/04, F16K 1/226

(54) **Klappenhahn für Flüssigkeitsbehälter und Flüssigkeitsleitungen**

(30) Priorität: 09.12.1999 DE 19959367
(71) Anmelder: PROTECHNA S.A., 1701 Fribourg (CH)
(72) Erfinder: Schütz, Udo, 56242 Selters/Westerwald (DE)
(74) Vertreter: Pürckhauer, Rolf, Dipl.-Ing.

(57) **Zusammenfassung**

Der unmittelbar an die Auslauföffnung (2) oder den Auslaufstutzen eines Flüssigkeitsbehälters (1) angeschlossene Klappenhahn (3) weist ein einteilig aus Kunststoff spritzgegossenes Hahngehäuse (4) sowie einen in dem Oberteil (5) des Hahngehäuses (4) drehbar gelagerten Handgriff (7) zur Betätigung einer Welle (8) auf, auf der eine kreisscheibenförmige Klappe (9) zum Öffnen und Schließen einer zylindrischen Durchgangsöffnung (10) im Unterteil (6) des Hahngehäuses (4) befestigt ist.

Die Durchgangsöffnung (10) des Hahngehäuses (4) bildet einen Sitz (11) mit einer Kugelgeometrie für die um eine zur Längsachse (12-12) der Durchgangsöffnung (10) senkrechte Achse (13-13) drehbare Klappe (9) in deren Schließstellung (9a).

## Beschreibung

Die Erfindung betrifft einen Klappenhahn für Flüssigkeitsbehälter und Flüssigkeitsleitungen, insbesondere als Entnahmearmatur zum Anschluß an den Auslaufstutzen oder die Auslauföffnung eines Transport- und Lagerbehälters für Flüssigkeiten, mit einem Hahngehäuse, in dem eine mittels eines Handgriffs zu betätigende, kreisscheibenförmige Klappe zum Öffnen und Schließen einer zylindrischen Durchgangsöffnung um eine zur Längsachse derselben senkrechte Achse drehbar gelagert ist (DE 198 15 082 A1).

Der Erfindung liegt die Aufgabe zugrunde, die Funktionssicherheit des gattungsgemäßen Klappenhahns zu verbessern.

Diese Aufgabe ist erfindungsgemäß gelöst durch einen Klappenhahn mit den Merkmalen des Patentanspruchs 1.

Die Unteransprüche beinhalten vorteilhafte Weiterbildungen der Erfindung.

Die Kugelgeometrie des Sitzes für die Klappe in deren Schließstellung in der Durchgangsöffnung des Gehäuses des erfindungsgemäßen Klappenhahns ermöglicht ein dichtes Schließen des Klappenhahns über einen gewissen Schwenkbereich der Klappe zu deren genauen Schließstellung quer zur Längsachse der Durchgangsöffnung des Hahngehäuses und gewährleistet dadurch eine hohe Funktionssicherheit des Klappenhahns. Desweiteren kann der Klappenhahn im Rahmen von Wartungsarbeiten gut gereinigt werden.

Der erfindungsgemäße Klappenhahn ist nachstehend anhand von Zeichnungsfiguren erläutert, die folgendes darstellen:

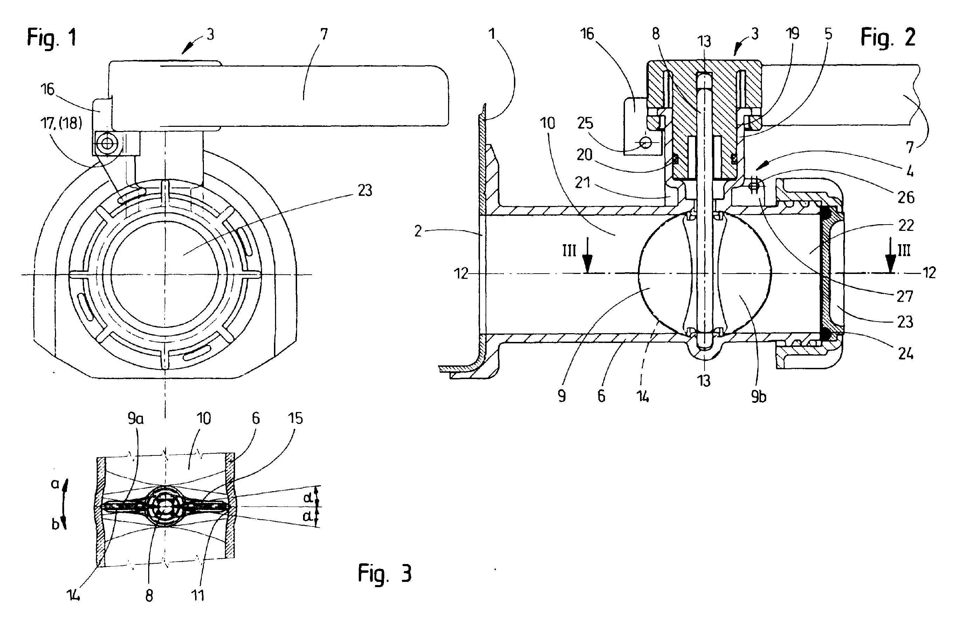

- Fig. 1: eine Stirnansicht des Klappenhahns,
- Fig. 2: einen Längsschnitt des Klappenhahns und
- Fig. 3: einen Querschnitt des Klappenhahns in der Schließstellung nach Linie III-III der Fig. 1.

Hauptbauteile des unmittelbar an die Auslauföffnung 2 eines Flüssigkeitsbehälter 1 oder den nicht dargestellten Auslaufstutzen desselben angeschlossenen Klappenhahns 3 sind ein einteilig aus Kunststoff spritzgegossenes Hahngehäuse 4 mit einem Oberteil 5 und einem Unterteil 6, sowie ein in dem Oberteil 5 des Hahngehäuses 4 drehbar gelagerter Handgriff 7 zur Betätigung einer in dem Oberteil 5 und dem Unterteil 6 des Hahngehäuses 4 drehbar gelagerten Welle 8, auf der eine kreisscheibenförmige Klappe 9 zum Öffnen und Schließen einer zylindrischen Durchgangsöffnung 10 im Unterteil 6 des Hahngehäuses 4 befestigt ist.

Die Durchgangsöffnung 10 des Hahngehäuses 4 bildet einen Sitz 11 mit einer Kugelgeometrie für die um eine zur Längsachse 12-12 der Durchgangsöffnung 10 senkrechte Achse 13-13 drehbare Klappe 9 in deren Schließstellung 9a.

Die Kugelgeometrie des Sitzes 11 ermöglicht einen Schließbereich über einen von der genauen Schließstellung 9a der Klappe 9 rechtwinklig zur Längsachse 12-12 der Durchgangsöffnung 10 des Hahngehäuses 4 in beiden Schwenkrichtungen a, b der Klappe 9 abweichenden Schwenkwinkel α in der Größenordnung von 5 bis 10°. In diesem Schließbereich übt der Klappenhahn 3 eine optimale Schließfunktion aus. Dies hat den Vorteil, daß der Klappenhahn, wenn dessen Schließstellung aufgrund einer Unachtsamkeit nicht genau eingestellt worden ist, trotzdem dicht schließt.

Die aus Kunststoff spritzgegossene Klappe 9 weist eine Umfangsnut 14 auf, in die ein Dichtring 15 aus Kunststoffmaterial eingespritzt ist, das härter als das Kunststoffmaterial des Hahngehäuses 4 ist.

An dem Handgriff 7 ist ein Anschlag 16 angeformt, der mit zwei Gegenanschlägen 17, 18 am Oberteil 5 des Hahngehäuses 4 zur Festlegung der Schließstellung 9a und der Offenstellung 9b der Klappe 9 des Klappenhahns 3 zusammenwirkt.

Das im unteren Abschnitt verjüngte Oberteil 5 des Hahngehäuses 4 mit dem durch einen 0-Ring 20 abgedichteten Drehlager 19 des Handgriffs 7 ist durch Stege 21 auf dem Gehäuseunterteil 6 abgestützt. Die an dem Handgriff 7 befestigte Welle 8 zum Schwenken der Klappe 9 des Klappenhahns 3 ist aus einem glasfaserverstärkten Kunststoff hergestellt. Diese konstruktiven Maßnahmen tragen zu einer Erhöhung der Fallfestigkeit des Klappenhahns bei, die bei der Ausrüstung eines Transport- und Lagerbehälters für Flüssigkeiten mit einem derartigen Klappenhahn von Bedeutung ist.

Die Auslauföffnung 22 des Klappenhahns 3 ist mit einer Schraubkappe 23 mit einem eingelegten 0-Ring 24 verschließbar.

Löcher 25, 26 im Anschlag 16 des Handgriffs 7 und in einem Ansatz 27 des Hahngehäuses 4 dienen zur Anbringung einer Verplombung als Originalitätssicherung bei einer Ausrüstung eines Flüssigkeitsbehälters mit dem Klappenhahn.

## Patentansprüche

1. Klappenhahn für Flüssigkeitsbehälter und Flüssigkeitsleitungen, insbesondere als Entnahmearmatur zum Anschluß an den Auslaufstutzen oder die Auslauföffnung eines Transport- und Lagerbehälter für Flüssigkeiten, mit einem Hahngehäuse, in dem eine mittels eines Handgriffs zu betätigende, kreisscheibenförmige Klappe zum Öffnen und Schließen einer zylindrischen Durchgangsöffnung um eine zur Längsachse derselben senkrechte Achse drehbar gelagert ist, dadurch gekennzeichnet, daß die Durchgangsöffnung (10) des Hahngehäuses (4) einen Sitz (11) mit einer Kugelgeometrie für die Klappe (9) in deren Schließstellung (9a) bildet.

2. Klappenhahn nach Anspruch 1, dadurch gekennzeichnet, daß der Sitz (11) des Hahngehäuses (4) einen Schließbereich für die Klappe (9) umfaßt.

3. Klappenhahn nach Anspruch 1 und 2, dadurch gekennzeichnet, daß die aus Kunststoff spritzgegossene Klappe (9) eine Umfangsnut (14) aufweist, in die ein Dichtring (15) aus Kunststoff eingespritzt ist.

4. Klappenhahn nach einem der Ansprüche 1 bis 3, dadurch gekennzeichnet, daß das Hahngehäuse (4) einteilig aus Kunststoff spritzgegossen ist.

5. Klappenhahn nach einem der Ansprüche 1 bis 4, dadurch gekennzeichnet, daß das Kunststoffmaterial des Dichtringes (15) härter als das Kunststoffmaterial des Hahngehäuses (4) ist.

6. Klappenhahn nach einem der Ansprüche 1 bis 5, gekennzeichnet durch ein verstärktes Oberteil (5) des Hahngehäuses (4).
